# NEUE EUROPÄISCHE PATENTSCHRIFT

(11) **EP 3 105 499 B2**
(45) Veröffentlichungstag und Bekanntmachung des Hinweises auf die Entscheidung über den Einspruch: **11.01.2023**
(45) Hinweis auf die Patenterteilung: 22.11.2017
(21) Anmeldenummer: 15704293.8
(22) Anmeldetag: 10.02.2015
(51) Int. Cl.: F21V 5/00, F21V 5/04, F21V 7/00, F21V 13/02, F21V 13/04, G02B 19/00, F21Y 115/10, F21Y 103/10

(54) **LÄNGLICHE MEHRTEILIGE LINSENANORDNUNG SOWIE LEUCHTE MIT EINER SOLCHEN LINSENANORDNUNG**
ELONGATE MULTIPARTITE LENS ARRANGEMENT AND LUMINAIRE COMPRISING SUCH A LENS ARRANGEMENT
AGENCEMENT DE LENTILLES DE FORME ALLONGÉE ET CONSTITUÉ DE PLUSIEURS PARTIES ET LAMPE COMPORTANT UN TEL AGENCEMENT

(30) Priorität: 11.02.2014 DE 102014202461
(43) Veröffentlichungstag der Anmeldung: 21.12.2016
(73) Patentinhaber: Zumtobel Lighting GmbH, 6850 Dornbirn (AT)
(72) Erfinder: EBNER, Stephan, A-6850 Dornbirn (AT)
(74) Vertreter: Kiwit, Benedikt
(86) Internationale Anmeldenummer: PCT/EP2015/052734
(87) Internationale Veröffentlichungsnummer: WO 2015/121243

(56) Entgegenhaltungen:
- EP-A1- 2 604 911
- EP-A1- 2 629 001
- EP-A2- 1 684 002
- EP-A2- 2 347 170
- EP-A2- 2 416 062
- WO-A1-2007/061222
- CA-A1- 2 785 201
- DE-A1-102004 051 382
- DE-A1-102009 034 841
- DE-A1-102011 078 287
- DE-A1-102012 202 148
- DE-B4-102012 102 652
- DE-U1-202011 051 669
- JP-A- 2009 021 203
- US-A1- 2003 223 235
- US-A1- 2007 076 427
- US-A1- 2007 139 913
- US-A1- 2010 039 812
- US-A1- 2011 114 977
- US-A1- 2011 156 584
- US-A1- 2011 292 651
- US-A1- 2012 057 353
- US-A1- 2012 320 587
- US-A1- 2014 022 794
- US-B1- 8 070 329
- US-B2- 8 029 157

## Beschreibung

Die vorliegende Erfindung betrifft eine längliche mehrteilige Linsenanordnung für Leuchten zur Beeinflussung eines von einem Leuchtmittel abgestrahlten Lichts sowie eine entsprechende Leuchte mit einer solchen Linsenanordnung. Längliche Linsenanordnungen, welche bezüglich ihrer Breite um ein vielfaches länger sind und somit in längliche Leuchten eingesetzt werden können, sind aus dem Stand der Technik bekannt. Weisen diese beispielsweise diskrete Linsen oder Linsenelemente bzw. Linsenbereiche auf, werden Sie hinlänglich auch als Linsenarray bezeichnet. Solche Linsenanordnungen sind zumeist einteilig ausgebildet, was den Nachteil mit sich bringt, dass mit zunehmender Länge einer solchen Linsenanordnung (z. B. >400mm) die thermische Längenausdehnung dieser Anordnung steigt. Dies kann bei einem typischen Anwendungstemperaturbereich von -30°C (beispielsweise im Kühlhaus und/oder in nordischen Ländern) bis zu über +40°C (beispielsweise in Industriehallen und/oder in warmen Klimabereichen wie im afrikanischen oder arabischen Raum) zu Problemen führen. Grund hierfür ist unter anderem, dass der Längenausdehnungskoeffizient von Metall (beispielsweise verwendet für die bzw. in der die Leuchtmittel aufnehmende(n) Platine oder das Gehäuse der Leuchte) um ein Vielfaches höher als der Längenausdehnungskoeffizient von Kunststoffen (wie beispielsweise der für die Linsenanordnung verwendete Kunststoff; in der Regel PMMA oder PC) ist. Zum einen besteht dadurch die Gefahr einer mechanischen Kollision von Leuchtmitteln und Optik, welche zu einer Beschädigung des Leuchtensystems führen kann. Zum anderen kann sich die Abstrahlcharakteristik durch eine entsprechend große Temperaturdifferenz in den unterschiedlichen Anwendungsgebieten (Δt bis zu 70°C und mehr) durch die unterschiedlich langen Linsenanordnungen und den daraus resultierenden unterschiedlichen Positionierungen der einzelnen Linsenelemente bezüglich der Leuchtmittel nachhaltig und negativ verändern. Eine längliche, mehrteilige Linsenanordnung des Stands der Technik ist in der Offenlegungsschrift EP 2 629 001 offenbart. Es ist somit eine Aufgabe der vorliegenden Erfindung, längliche Linsenanordnungen und damit ausgestattete Leuchten bereitzustellen, die die oben bezeichneten Nachteile überwinden und zudem flexibel und sicher eingesetzt werden können.

Der Gegenstand der vorliegenden Erfindung wird durch die unabhängigen Ansprüche bestimmt. Die abhängigen Ansprüche bilden den zentralen Gedanken der Erfindung in besonders vorteilhafter Weise weiter.

Gemäß einem ersten Aspekt betrifft die vorliegende Erfindung eine Längliche mehrteilige Linsenanordnung für Leuchten zur Beeinflussung eines von einem Leuchtmittel abgestrahlten Lichts. Die Linsenanordnung weist hierzu ein erstes längliches optisches Element (im Folgenden auch als erstes (optisches) Element bezeichnet) mit einer ersten Längsachse und wenigstens ein dem ersten optischen Element in Lichtlenkrichtung nachgeschaltetes und vom ersten optischen Element separat bereitgestelltes zweites längliches optisches Element (im Folgenden auch als zweites (optisches) Element bezeichnet) mit einer zweiten Längsachse, auf. Wenigstens das erste optische Element weist wenigstens einen entlang der ersten Längsachse vorgesehenen bzw. angeordneten oder ausgebildeten, definierten Lichteintrittsbereich zum Einleiten von Licht des Leuchtmittels in die Linsenanordnung auf. Neben dem ersten Element kann also auch das zweite (oder weitere, im Folgenden noch beschriebene optische Elemente) entsprechende Lichteintrittsbereiche aufweisen. Zudem kann der Lichteintrittsbereich durchgehend über (die gesamte Länge) des optischen Elements ausgebildet sein oder entlang der Längsachse angeordnete (diskrete) Lichteintrittsbereiche aufweisen. Beispielsweise können die Lichteintrittsbereiche also entlang der Längsachse des ersten optischen Elements in einer oder auch in mehreren Reihen oder auch in Kombination mit individuell zugeordneten Lichteintrittsbereichen angeordnet bzw. ausgebildet sein. Das zweite optische Element wirkt zur Lichtlenkung der Linsenanordnung optisch mit dem ersten optischen Element zusammen, um die Lichtlenkung des ersten optischen Elements fortzusetzen. Weist die Linsenanordnung nur zwei optische Elemente auf, so schließt das zweite optische Element die Lichtlenkung der Linsenanordnung auch ab und dient zur Abstrahlung des Lichts vorzugsweise in eine Hauptabstrahlrichtung der Linsenanordnung.

Wie bereits erwähnt, kann die Linsenanordnung neben den ersten beiden optischen Elementen ferner ein oder mehrere weitere, wenigstens dem ersten optischen Element in Lichtlenkrichtung nachgeschaltete und vom ersten optischen Element separat bereitgestellte längliche optische Elemente aufweisen. Die weiteren optischen Elemente wirken hierbei zur Lichtlenkung optisch mit dem ersten und vorzugsweise dem zweiten und gegebenenfalls auch anderen weiteren optischen Element zusammen, um eine gewünschte geschlossene Lichtlenkung der Linsenanordnung zu erzielen.

Die Linsenanordnung gemäß der vorliegenden Erfindung setzt sich folglich aus wenigstens zwei oder mehreren gestapelten, mechanisch getrennten und optisch aufeinander abgestimmten Elementen zusammen. Da die jeweiligen optischen Elemente unterschiedliche Aufgaben haben, wie im Weiteren beschrieben wird, können sie in einem von einer 1:1-Beziehung abweichenden Mengenverhältnis vorgesehen werden. Das zweite und die weiteren optischen Elemente werden auf das bzw. die ersten optischen Elemente gestapelt, wobei die dem ersten Element in Lichtlenkrichtung nachgeschalteten optischen Elemente die Lichtlenkung des ersten optischen Elements fortsetzen, wobei das oder die letzten Elemente in Lichtlenkrichtung gesehen die Lichtlenkung abschließen und folglich das Licht über einen Lichtabstrahlbereich abstrahlen. Der Stapel aus mehr als zwei unterschiedlichen optischen Elementen lässt sich anwendungsbedingt beliebig kombinieren.

Aufgrund der mehrstufigen und insbesondere mehrteiligen Ausbildung der erfindungsgemäßen Linsenanordnung können insbesondere auch große und vor allem lange Linsenanordnungen so ausgebildet sein, dass die thermischen Einflüsse auf die Optik minimiert werden. Folglich kann eine Kollisionsgefahr zwischen Leuchtmitteln und Optik reduziert und die Abstrahlcharakteristik für gewisse Temperaturgrenzen stabilisiert werden.

Ebenso ist es möglich, durch die unterschiedlichen Stufen der Optik komplexere optische Geometrien zu realisieren, die beispielsweise mit einstufigen - also einteiligen - Optiken nicht hergestellt werden können, da sie dann nicht entformbar sind.

Ebenso wird es durch die erfindungsgemäße Linsenanordnung ermöglicht, bei Anpassung an neuere und effizientere Leuchtmittel lediglich eine oder wenige der Stufen der Linsenanordnung - also nur eine oder wenige der optischen Elemente; vorzugsweise nur das erste optische Element - auszutauschen. Dies ist gegenüber dem Austausch der gesamten Linsenanordnung mit einer komplett neuen Optik deutlich kostengünstiger.

Die Längsachsen der optischen Elemente, vorzugsweise wenigstens des ersten und zweiten optischen Elements, können bevorzugt parallel zueinander ausgerichtet sein. Zusätzlich oder alternativ ist es auch denkbar, dass wenigstens eine der Längsachsen, vorzugsweise eine der Längsachsen der weiteren optischen Elemente, in einer Ebene senkrecht zu einer Hauptabstrahlrichtung der Linsenanordnung (also in der Haupterstreckungsebene der Linsenanordnung bzw. der optischen Elemente), um einen vorgegebenen Winkel zu der oder den anderen Längsachsen schräg oder quer ausgerichtet ist. Mit anderen Worten können die optischen Elemente je nach Anwendungsfall und gewünschter Abstrahlcharakteristik beliebig miteinander kombiniert werden.

Der Lichteintrittsbereich ist als Ausnehmung ausgebildet, um so einer definierten Aufnahme der Leuchtmittel zu dienen. Erfindungsgemäß weist das erste optische Element ein die Lichteintrittsbereiche bildendes Raster oder Gitter auf. Alternativ oder zusätzlich können die Lichteintrittsbereiche auch in Form eines Rasters oder Gitters angeordnet sein. Die Lichteintrittsbereiche sind also ein oder mehrreihig entlang der Längsachse angeordnet bzw. ausgebildet. Jedem Lichteintrittsbereich bzw. Raster- oder Gitterelement ist dann wenigstens ein Leuchtmittel zuordenbar.

Die Lichteintrittsbereiche beziehungsweise Raster- oder Gitterelemente sind vorzugsweise als optische Lichtbeeinflussungselemente, insbesondere als Linsen, ausgebildet oder weisen entsprechende (diskrete) Lichtbeeinflussungselemente auf.

Durch die Ausbildung insbesondere des ersten optischen Elements als oder in Form eines Gitters bzw. Rasters wird es ermöglicht, diskrete oder wahlweise Linsenbereiche bereitzustellen. Ferner können die Gitter- bzw. Rasterelemente aus optischen Prismen- oder Linsenelementen bestehen bzw. das optische Element diskrete Linsen oder Linsenbereiche bereitstellen, welche vorzugsweise direkt auf die Anzahl der verwendeten Leuchtmittel (z.B. Leuchtdioden; LEDs) abgestimmt sind. In diesem Fall ist die Anzahl an Lichteintrittsbereichen bzw. Gitter- oder Rasterelementen abhängig von der Anzahl der verwendeten Leuchtmittel. In diesem Fall ist jedem Lichteintrittsbereich bzw. Gitter oder Rasterelement wenigstens ein Leuchtmittel zugeordnet. In speziellen Anwendungsfällen können einzelne Lichteintrittsbereiche bzw. Gitter- oder Rasterelemente auch leer bleiben, sodass nicht nur eine gleichmäßige Bestückung der optischen Elemente mit den Lichteintrittsbereichen jeweils zugeordneten Leuchtmitteln möglich ist, sondern den Lichteintrittsbereichen wahlweise kein, ein oder mehrere Leuchtmittel zugeordnet werden können, um auf die individuellen Anforderungen der gewünschten Abstrahlcharakteristik wahlweise angepasst zu werden.

Die optischen Elemente sind vorzugsweise wenigstens teilweise in (flächigem) Kontakt mit anderen (benachbarten) optischen Elementen, um insbesondere die optischen Elemente einfach zueinander zu positionieren und miteinander festzulegen. Vorzugsweise können die Lichteintrittsbereiche des zweiten und der weiteren optischen Elemente - zum Fortführen der Lichtlenkung des ersten und entsprechend in Lichtlenkrichtung weiterer vorgeschalteter optischer Elemente - wenigstens teilweise in vorzugsweise flächigem Kontakt mit Lichtaustrittsbereichen wenigstens einer der in Lichtlenkrichtung vorgeschalteten optischen Elemente sein.

Gemäß einer bevorzugten Ausgestaltungsform können die optischen Elemente mechanisch miteinander korrespondierende (also auf die jeweiligen optischen Nachbarelemente abgestimmte) Verbindungselemente zum definierten Verbinden und Positionieren der optischen Elemente zueinander aufweisen. Beispielsweise können die Verbindungselemente Schienen zum gleitenden Zusammenführen der optischen Elemente oder vergleichbare Führungen aufweisen. Zusätzlich oder alternativ können als Verbindungselemente auch Zapfen, Stifte und dergleichen sowie jeweils entsprechende Aufnahmeelemente vorgesehen sein. Auf diese Weise können die einzelnen Stufen der Linsenanordnung bzw. des optischen Linsenstapels vernünftig zueinander positioniert werden, da die korrespondierenden Verbindungselemente eine definierte Ausrichtung und einen sicheren Zusammenhalt der einzelnen Stufen ermöglicht. Die Art und Ausgestaltung der korrespondierenden Verbindungselemente hängt hierbei von der Art der Herstellung der jeweiligen Elemente ab und können daher beliebig ausgebildet sein.

Wenigstens eines der optischen Elemente, vorzugsweise wenigstens das zweite optische Element, kann eine sich in Längsrichtung des optischen Elementes - vorzugsweise über dessen gesamte Länge - erstreckende Ausnehmung zur Aufnahme eines weiteren optischen Elements, vorzugsweise des ersten optischen Elements, aufweisen.

Das in Lichtlenkrichtung letzte optische Element weist ein mit dem optischen Element integral ausgebildetes Schutzelement zum Schutz der Leuchtmittel auf. Somit kann auf einfache Weise ein Schutzelement zum Schutz vor Verschmutzung und Berührung bereitgestellt werden. Das Schutzelement weist Verrastelemente auf, um beim Zusammenbau der Linsenanordnung automatisch mit einem korrespondierenden Verrastelementen zusammenzuwirken, um somit die Linsenanordnung und ggf. weitere Elemente einer Leuchte mechanisch zu verbinden oder zusammenzuhalten; also zum Fixieren bzw. Positionieren und Ausrichten entsprechender Elemente.

Das erste und zweite optische Element sind als lineare Linsenelemente, insbesondere Extrusionslinsen, Linsenarrays, insbesondere Platten mit diskreten Linsen oder Linsenelementen, Gitter- bzw. Rasterelemente, MPO-Platten (Mikro-Prismen-Optik Platten) oder KOP-Platten (Kooperative Optik Platten), diffraktive Optiken, Freiformoptiken und dergleichen ausgebildet. Die weiteren optischen Elemente können als lineare Linsenelemente, insbesondere Extrusionslinsen, Linsenarrays, insbesondere Platten mit diskreten Linsen oder Linsenelementen, Gitter- bzw. Rasterelemente, MPO-Platten (Mikro-Prismen-Optik Platten) oder KOP-Platten (Kooperative Optik Platten), diffraktive Optiken, Freiformoptiken und dergleichen oder als diffus streuende Platten ausgebildet sein. Die Wahl der jeweiligen Optik hängt insbesondere von der Art der Verwendung der Linsenanordnung und der gewünschten Lichtlenk- bzw. Abstrahlcharakteristik ab. Die jeweiligen optischen Elemente können also im Querschnitt gesehen vorzugsweise eine komplexe Geometrie aufweisen. Daher ist die mehrteilige Ausgestaltung der Linsenanordnung besonders vorteilhaft, da mit dieser auch komplexe Formen der Gesamt-Linsenanordnung vergleichsweise einfach bereitgestellt werden, weil die einzelnen optischen Elemente an sich zwangsläufig eine geringere Komplexität aufweisen.

Gemäß einem weiteren Aspekt betrifft die Erfindung eine Leuchte aufweisend eine Vielzahl von Leuchtmitteln sowie eine längliche mehrteilige Linsenanordnung gemäß der Erfindung, wobei jedem der Lichteintrittsbereiche kein, ein oder mehrere Leuchtmittel definiert optisch zugeordnet sind.

Die erfindungsgemäße Leuchte kann ferner ein Gehäuse zur Aufnahme der Leuchtmittel und der Linsenanordnung aufweisen, wobei die Linsenanordnung - vorzugsweise das oder die in Lichtlenkrichtung letzte(n) längliche(n) optische(n) Element(e) - eine Abdeckung der Leuchte bzw. des Gehäuses bilden. Somit kann ein geschlossenes Leuchtensystem einfach bereitgestellt werden.

Ferner können die Leuchtmittel auf einer vorzugsweise länglichen Platine aufgebracht sein. Die Platine kann sich dabei vorzugsweise im Wesentlichen über die gesamte Länge der Linsenanordnung erstrecken. Das oder die erste(n) optische(n) Element(e) können direkt auf der Platine oder dem Gehäuse lösbar oder unlösbar vorgesehen sein. Die auf die Platine direkt aufgebrachten optischen Stufen können somit gleichzeitig eine Art von Berührungsschutz der elektrischen Komponenten bereitstellen. Somit kann eine Leuchte bereitgestellt werden, bei der die erste bzw. die ersten optischen Stufen direkt auf der (LED-)Platine aufgebracht sind, während die nachfolgende bzw. die nachfolgenden Stufen als partielle oder gesamte Abdeckung der Leuchte dienen kann.

Das in Lichtlenkrichtung letzte optische Element weist ein mit diesem optischen Element integral ausgebildetes Schutzelement zum Schutz der Leuchtmittel auf. Hierbei kann das Schutzelement alleine oder in Verbindung mit dem Gehäuse oder der Platine oder sonstiger Elemente der Leuchte einen räumlich nach außen geschlossenen Raum zum Schutz der Leuchte bzw. Leuchtmittel gegenüber Verschmutzungen oder Berührungen bereitstellen. Das Verrastelement wirkt mit einem korrespondierenden Verrastelement der Linsenanordnung oder der Leuchte zum mechanischen Verbinden oder Zusammenhalten der Linsenanordnung oder der Leuchte zusammen.

Besonders vorzugsweise ist wenigstens ein, vorzugsweise das in Lichtlenkrichtung letzte optische Element in Richtung der Längsachse der Linsenanordnung gesehen im Wesentlichen genauso lang wie das Gehäuse oder das Leuchtmittel bzw. die die Leuchte aufweisenden Platine. Auf diese Weise ist es sehr einfach mögliche, ein geschlossenes und geschütztes optische System bereitzustellen.

Die Leuchtmittel weisen vorzugsweise Leuchtioden (LEDs) auf.

Weitere Vorteile und Ausgestaltungen der vorliegenden Erfindung werden im Folgenden anhand der Zeichnungen der begleitenden Figuren beschrieben.
- Figur 1: zeigt eine Linsenanordnung,
- Figur 2: zeigt ein erstes optisches Element gemäß der Linsenanordnung nach Figur 1,
- Figur 3: zeigt schematisch den Grundaufbau einer Linsenanordnung gemäß der vorliegenden Erfindung,
- Figur 4: zeigt unterschiedliche Bestückungsvarianten von einzelnen optischen Gitter- bzw. Rasterelementen eines ersten optischen Elements gemäß der vorliegenden Erfindung,
- Figur 5: zeigt auf der linken Seite eine herkömmliche einstufige Splitlinse und auf der rechten Seite eine zweistufige Linsenanordnung (Splitlinse).
- Figur 6: zeigt eine geschlossene Linsenanordnung gemäß der vorliegenden Erfindung,
- Figur 7: zeigt eine weitere Ausgestaltungsform der Linsenanordnung,
- Figur 8: zeigt eine Leuchte mit einer dreistufigen Linsenanordnung.

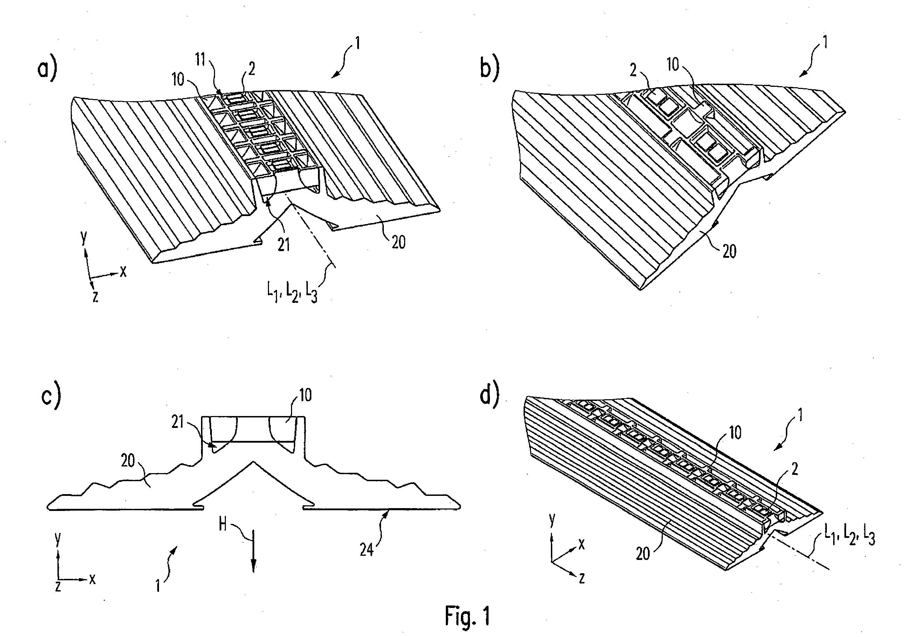

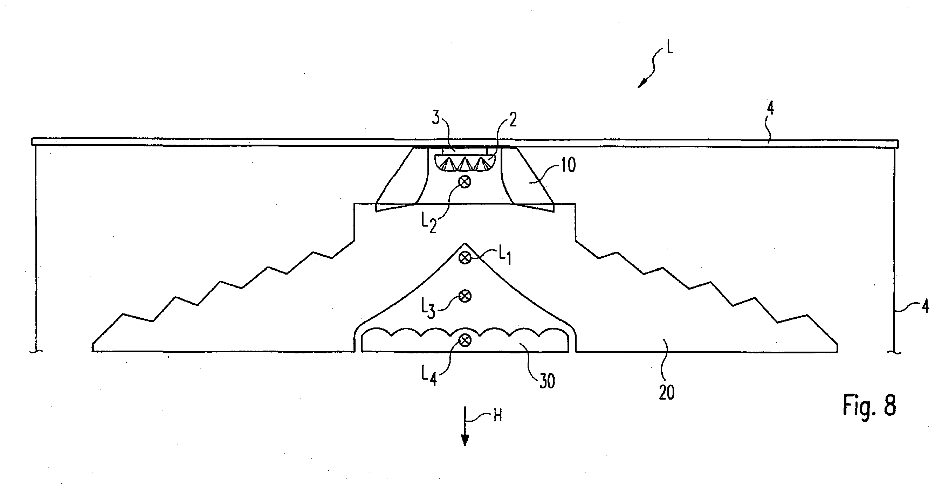

Figur 1 zeigt ein Ausfuhrungsbeispiel einer länglichen Linsenanordnung 1 für Leuchten L (siehe Figur 8) zur Beeinflussung eines von einem Leuchtmittel 2 abgestrahlten Lichts. Unter länglich wird im Rahmen der Erfindung verstanden, dass die im Wesentlichen senkrecht zur Hauptabstrahlrichtung H in der in Figur 1 gezeigten XZ-Ebene (Haupterstreckungsebene) erstreckende Linsenanordnung 1 eine um ein Vielfaches größere Länge in Richtung Ihrer Längsachse L1 im Vergleich zu Ihrer Breite (in Figur 1 in Richtung der X-Achse dargestellt) hat. Die Linsenanordnung 1 kann dabei, wie in Figur 1 gezeigt, eine im Wesentlichen rechteckige Grundform haben, wobei die Erfindung hierauf nicht beschränkt ist.

Erfindungsgemäß ist die längliche Linsenanordnung 1 mehrteilig ausgebildet. Die längliche mehrteilige Linsenanordnung 1 weist hierzu ein erstes längliches optisches Element 10 mit einer Längsachse L2 auf. Das erste optische Element 10 weist wenigstens einen entlang seiner Längsachse L2 vorgesehenen (also ausgebildeten oder sich erstreckenden oder angeordneten), definierten Lichteintrittsbereich 11 zum Einleiten von Licht eines Leuchtmittels 2 in die Linsenanordnung 1 auf.

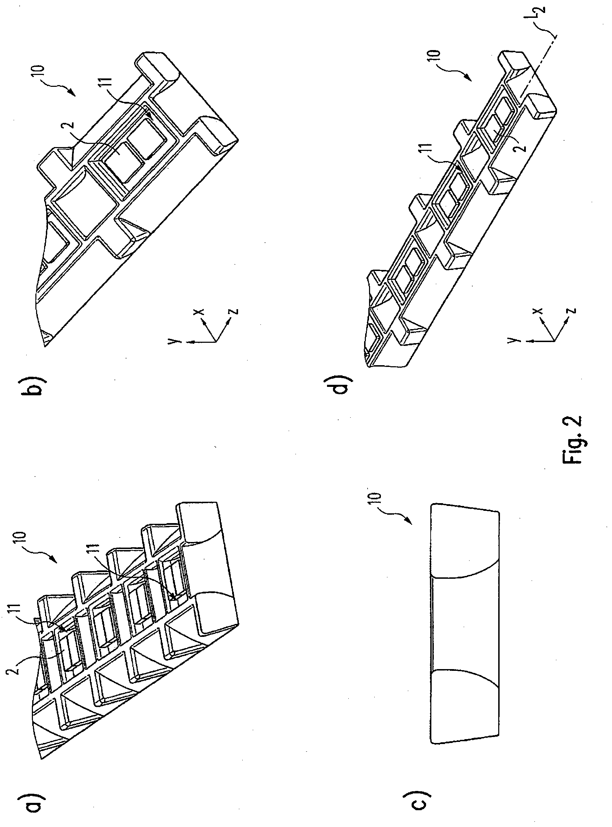

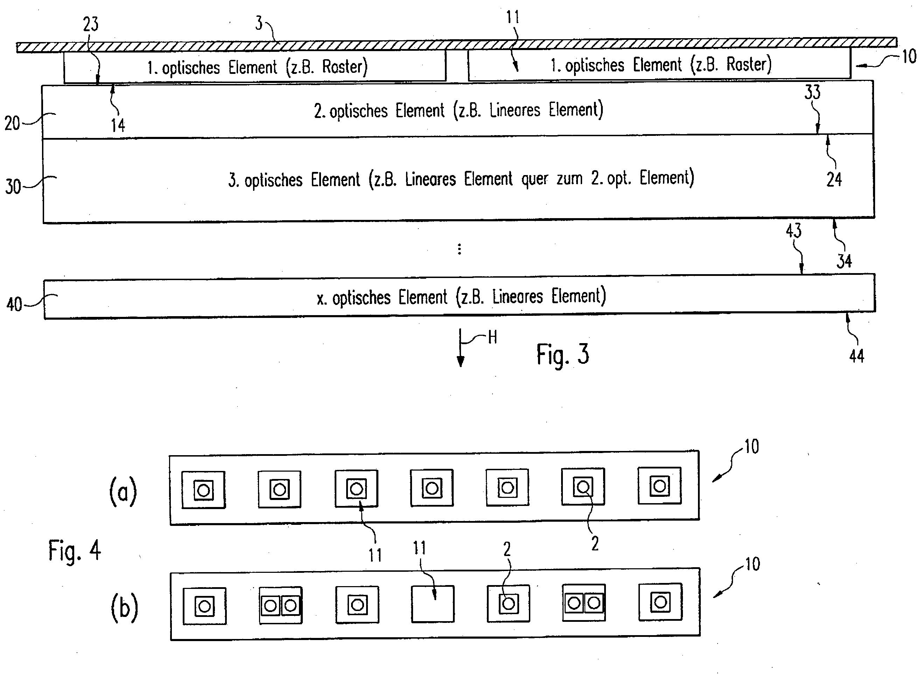

Der Lichteintrittsbereich 11 kann vorzugsweise als Ausnehmung in dem entsprechenden - vorliegend dem ersten - optischen Element 10 insbesondere zur Aufnahme der Leuchtmittel 2 ausgebildet sein. Die Ausnehmung kann sich hierzu beispielsweise als sich in Längsrichtung des ersten optischen Elements 10 erstreckende durchgehende Ausnehmung darstellen. Alternativ ist es auch denkbar, dass das erste optische Element 10 ein die Lichteintrittsbereiche 11 bildendes Raster oder Gitter 12 aufweist, wie es beispielsweise in Figur 2 dargestellt ist. Auch ist denkbar, dass die Lichteintrittsbereiche 11 lediglich in Form eines Rasters oder Gitters angeordnet sind. In jedem Fall ist bei einer derartigen Ausgestaltung jedem Lichteintrittsbereich 11 - bzw. jedem Raster- oder Gitterelement - wenigstens ein Leuchtmittel 2 zuordenbar, wie dies beispielsweise in den Figuren 4a und 4b schematisch dargestellt ist. Figur 4a zeigt hierbei eine Ausführungsform des ersten optischen Elements 10, bei dem die Lichteintrittsbereiche 11 auf die Anzahl der verwendeten Leuchtmittel 2 abgestimmt ist. In diesem Fall ist also die Anzahl an Gitter- bzw. Rasterelementen 11 abhängig von der Anzahl der verwendeten Leuchtmittel 2. Es ist jedoch auch denkbar, dass den einzelnen Lichteintrittsbereichen 11 bzw. den Gitter- oder Rasterelementen nicht in jedem Fall ein einziges Leuchtmittel 2 zugeordnet ist, sondern wahlweise auch kein Leuchtmittel 2 oder mehrere Leuchtmittel 2, wie dies in Figur 4b gezeigt ist. Je nach gewünschter Abstrahlcharakteristik und Ausgestaltung der Linsenanordnung 1 können somit auf einfache Weise spezielle Anwendungsfälle generiert werden, in dem die Anzahl und Position der Leuchtmittel 2 entsprechend frei wählbar ist. Liegt beispielsweise gar kein Gitter bzw. Raster vor, also ist beispielsweise der Lichteintrittsbereich 11 des ersten optischen Elements 10 als durchgehende Ausnehmung in dem ersten optischen Element 10 vorgesehen, so kann die Positionierung der einzelnen Leuchtmittel 2 an beliebigen Positionen innerhalb dieser Ausnehmung geschehen, was die Flexibilität der vorliegenden Linsenanordnung 1 weiter erhöht.

Die Lichteintrittsbereiche 11 bzw. die einzelnen Raster- oder Gitterelemente sind vorzugsweise als optische Lichtbeeinflussungselemente ausgebildet, insbesondere als optische Prismen- oder Linsenelemente. Hierbei können einzelne, mehrere oder alle der definierten Lichteintrittsbereiche 11 entsprechend Lichtbeeinflussend ausgebildet sein; beispielsweise in Form einer Linse oder anderer optischer Elemente. Folglich kann das Raster bzw. Gitter auch durch definiert oder undefiniert vorgesehene Linsen oder Linsenelemente als Lichteintrittsbereiche 11 auf dem ersten optischen Element 10 bereitgestellt werden, deren Position ebenfalls frei wählbar ist.

Neben dem ersten optischen Element 10 weist die mehrteilige Linsenanordnung 1 ferner wenigstens ein weiteres, zweites optisches Element 20 auf. Auch dieses zweite optische Element 20 erstreckt sich entlang einer Längsachse L3. Das zweite längliche optische Element 20 ist bezüglich dem ersten optischen Element 10 in Lichtlenkrichtung nachgeschaltet vorgesehen, wobei die beiden optischen Elemente separat bereitgestellt sind; also nicht integral ausgebildet sind. Die beiden optischen Elemente 10, 20 wirken zur Lichtlenkung der Linsenanordnung 1 optisch zusammen, um die Lichtlenkung des ersten optischen Elements 10 über das zweite optische Element 20 fortzusetzen und, sofern die mehrteilige Linsenanordnung 1 insgesamt aus diesen zwei optischen Elementen 10, 20 besteht, die Lichtlenkung in der Linsenanordnung 1 abzuschließen, sodass das Licht an einem Lichtabstrahlbereich 24 des zweiten optischen Elements 20 in Hauptabstrahlrichtung H abgestrahlt werden kann.

Die zwei optischen Elemente 10, 20 sind also zu einer geschlossenen Lichtlenkung aufeinander gestapelt. Es ist jedoch auch denkbar, dass sich die mehrteilige Linsenanordnung 1 bzw. der Stapel aus mehr als zwei unterschiedlichen optischen Elementen 10, 20 zusammen setzt, die sich anwendungsbedingt beliebig kombinieren lassen, wie dies beispielshaft und schematisch in Figur 3 gezeigt ist. Die Linsenanordnung 1 weist in diesem Fall ein oder mehrere weitere, wenigstens dem ersten optischen Element 10 in Lichtlenkrichtung nachgeschaltete und vom ersten optischen Element 10 separat bereitgestellte längliche optische Elemente 30, 40 mit jeweils einer Längsachse L4 auf. Diese weiteren optischen Elemente 30, 40 wirken zur Lichtlenkung optisch mit dem ersten und vorzugsweise dem zweiten und weiteren (vorzugsweise vorgeschalteten) optischen Elementen 10, 20, 30 zusammen, um eine gewünschte geschlossene Lichtlenkung zu erzielen. Hierbei muss die Lichtführung durch die Linsenanordnung 1 nicht für jeden Lichtstrahl durch jedes optische Element 10, 20, 30, 40 führen. Es ist beispielsweise auch denkbar, dass das Licht derart in den einzelnen optischen Elementen 10, 20, 30, 40 gelenkt wird, dass beispielsweise ein Teil des Lichtes vom ersten optischen Element 10 in das zweite optische Element 20 und ein weiterer Teil des Lichts aus dem ersten optischen Element 10 direkt oder über das zweite optische Element 20 in das dritte optische Element 30 gelenkt wird und/oder ein Teil des Lichts von dem zweiten optischen Elements in Hauptabstrahlrichtung H abgestrahlt und ein anderer Teil in das dritte optische Element 30 gelenkt wird, von dem das Licht ebenfalls in Hauptabstrahlrichtung H abgestrahlt wird, um eine beispielsweise homogene Lichtabstrahlung bzw. definiert charakteristische Lichtabstrahlung zu erzielen.

Die Längsachsen L2, L3, L4 der optischen Elemente 10, 20, 30, 40, vorzugsweise wenigstens die Längsachsen L2, L3 des ersten und zweiten optischen Elements 10, 20, sind vorzugsweise parallel zueinander ausgerichtet. Der Übersichtlichkeit halber sind die Längsachsen L1, L2, L3 in Figur 1 zusammengefasst dargestellt. In Figur 8 sind die Längsachsen L1, L2, L3, L4 beispielhaft in der Draufsicht dargestellt. Beispielsweise in dem Fall, in dem wenigstens die Längsachsen L2 und L3 der ersten beiden optischen Elemente 10, 20 parallel zueinander ausgerichtet sind, kann, wie in Figur 1 dargestellt, das erste optische Element 10 in eine Ausnehmung 21 des zweiten optischen Elements 20 sicher aufgenommen werden. Dasselbe gilt für alle optischen Elemente 10, 20, 30, 40 im Zusammenspiel mit anderen benachbarten optischen Elementen 10, 20, 30, 40.

Es ist alternativ oder zusätzlich auch denkbar, dass wenigstens eine der Längsachsen L2, L3, L4, vorzugsweise eine der Längsachsen L4 der weiteren optischen Elemente 30, 40, in einer Ebene senkrecht zu der Hauptabstrahlrichtung H der Linsenanordnung 1 (also in der Haupterstreckungseben der Linsenanordnung 1) um eine vorgegebenen Winkel zu der oder den anderen Längsachsen L2, L3, L1 schräg oder quer ausgerichtet sind. In diesem Fall können beispielsweise die optischen Elemente quer zueinander angeordnet sein; mit Verweis auf Figur 3 kann beispielsweise das dritte optische Element 30 quer zum zweiten optischen Element 20 vorgesehen sein, wenn dies anwendungsbedingt für eine definierte Lichtabstrahlung gewünscht ist.

Die optischen Elemente 10, 20, 30, 40, vorzugsweise Lichteintrittsbereiche 23, 33, 43 des zweiten und der weiteren optischen Elemente 20, 30, 40, sind vorzugsweise wenigstens teilweise in (flächigem) Kontakt mit anderen optischen Elementen, vorzugsweise den Lichtaustritts- bzw. Lichtabstrahlbereichen 14, 24, 34 wenigstens einer der in Lichtlenkrichtung vorgeschalteten optischen Elemente 10, 20, 30, um die optischen Elemente 10, 20, 30, 40 einfach zueinander zu positionieren und festzulegen sowie vorzugsweise die Lichtlenkung des ersten und entsprechend in Lichtlenkrichtung weiterer vorgeschalteter optischer Elemente 10, 20, 30 in gewünschter Weise fortzuführen.

Um die optischen Elemente 10, 20, 30, 40 definiert zu verbinden und zueinander zu positionieren, weisen die optischen Elemente 10, 20, 30, 40 vorzugsweise mechanisch miteinander korrespondierende Verbindungselemente (nicht gezeigt) auf. Beispielsweise können diese Verbindungselemente in Form von Schienen oder Führungen ausgebildet sein, sodass die einzelnen optischen Elemente ineinander eingeführt und zueinander ausgerichtet werden können; mithin also optische Nachbar-Elemente aufeinander abgestimmt positionierbar sind. Zur genauen Positionierung der optischen Elemente zueinander können beispielsweise zusätzlich Verrastelemente vorgesehen sein. Alternativ oder zusätzlich können die Verbindungselemente auch Zapfen, Stifte und dergleichen sowie jeweils entsprechende Aufnahmeelemente aufweisen. Vorzugsweise sind die optischen Elemente 10, 20, 30, 40 zerstörungsfrei lösbar miteinander verbunden.

Wenigstens eines der optischen Elemente 10, 20, 30, 40, vorzugsweise wenigstens das zweite und/oder die weiteren optischen Element 20, 30, 40, weisen eine sich in Längsrichtung des optischen Elementes 10, 20, 30, 40 vorzugsweise über dessen gesamte Länge erstreckende Ausnehmung 21 zur Aufnahme eines weiteren optischen Elements 10, 20, 30, 40, vorzugsweise des ersten optischen Elements 10 oder eines anderen in Lichtlenkrichtung vorgeschalteten optischen Elements 20, 30, auf.

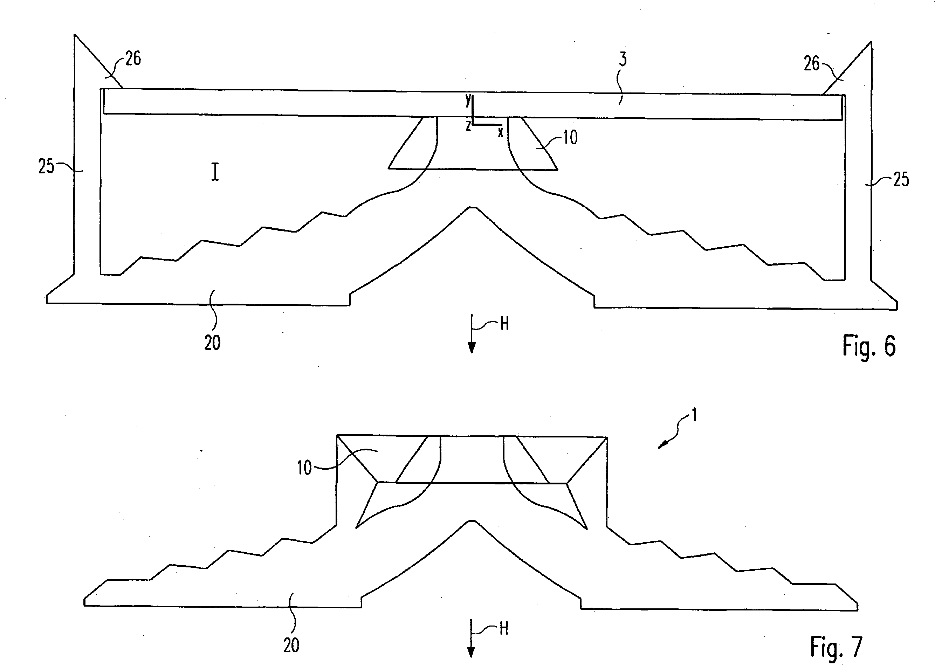

Das in Lichtlenkrichtung letzte optische Element 10, 20, 30, 40 weist ein mit dem optischen Element 10, 20, 30, 40 integral ausgebildetes Schutzelement 25 zum Schutz der verwendeten Leuchtmittel gegenüber Verschmutzungen und Berührungen auf. Wie beispielsweise aus Figur 6 zu entnehmen, kann dieses Schutzelement 25 beispielsweise ein sich rückseitig von dem entsprechenden (letzten) optischen Element 20 entgegen der Hauptabstrahlrichtung H erstreckendes Wandelement darstellen, welches mit Verrastelementen (bspw. Rastnasen) 26 versehen ist, die beim Zusammenführung der Linsenanordnung 1 beispielsweise mit einem Teil oder Plattenelement des ersten optischen Elements 10 oder der die Leuchtmittel 2 aufweisenden Platine 3 oder auch einem Teil (beispielsweise Gehäuse 4; siehe Figur 8) der Leuchte L verrasten. Somit kann mittels der Verrastelemente 26 sowie damit korrespondierender Verrastelemente eines anderen optischen Elements, der Platine 3 oder eines anderen Teils der Leuchte L die Linsenanordnung 1 bzw. die Leuchte L oder Teile davon mechanisch verbunden oder zusammengehalten und vorzugsweise auch zueinander ausgerichtet werden.

Im Fall einer Ausführungsform eines ersten optischen Elements 10 als Platte weist dieses vorzugsweise diskrete Linsen oder Linsenelemente als Lichteintrittsbereiche 11 auf, wie dies der Figur 6 zu entnehmen ist, wenn anstelle der gezeigten Platine 3 eine plattenartiges erstes optisches Element 10 angenommen wird und die Platine 3 dann auf dessen Rückseite vorzusehen wäre. Ein solches Schutzelement 25 kann dann, wie zuvor beschrieben und in Figur 6 gezeigt, gleichzeitig als Verbindungselement der zuvor beschriebenen Art dienen, wobei zur genauen Positionierung der optischen Elemente 10, 20 zueinander bzw. zu der Platine 3 in dem ersten optischen Element 10 bzw. der Platine 3 beispielsweise Aufnahmen für die Rastnasen 26 bereitgestellt sind. Wie zuvor bereits erwähnt, können die optischen Elemente 10, 20, 30, 40 beliebig mit Schutzelementen 25 ausgebildet sein, um entsprechenden Schutz gegenüber Verschmutzungen und Berührungen bereitzustellen und gegebenenfalls als Verbindungselement mit anderen optischen Elementen 10, 20, 30, 40 oder Teilen der Leuchte L zu dienen.

Besonders vorzugsweise erstreckt sich das Schutzelement über die gesamte Länge des entsprechenden optischen Elementes, um somit vorzugsweise eine (seitlich) geschlossene und somit nach außen abgegrenzte und geschützte Linsenanordnung 1 bzw. Leuchte L zu bilden.

Je nach Anwendungsspezifikation können die optischen Elemente 10, 20, 30, 40 wahlweise als Lineare Linsenelemente, insbesondere Extrusionslinsen, Linsenarrays, insbesondere Platten mit diskreten Linsen oder Linsenelementen, Gitter- bzw. Rasterelemente, MPO- oder KOP-Platten, diffraktive Optiken und/oder Freiformoptiken ausgebildet sein, wobei auch unterschiedliche Linsenformen der optischen Elemente 10, 20, 30, 40 untereinander beliebig kombinierbar sind. Da die jeweiligen optischen Elemente 10, 20, 30, 40 unterschiedliche Aufgaben haben, können Sie folglich auch in einem von einer 1:1-Beziehung abweichenden Mengenverhältnis vorgesehen werden.

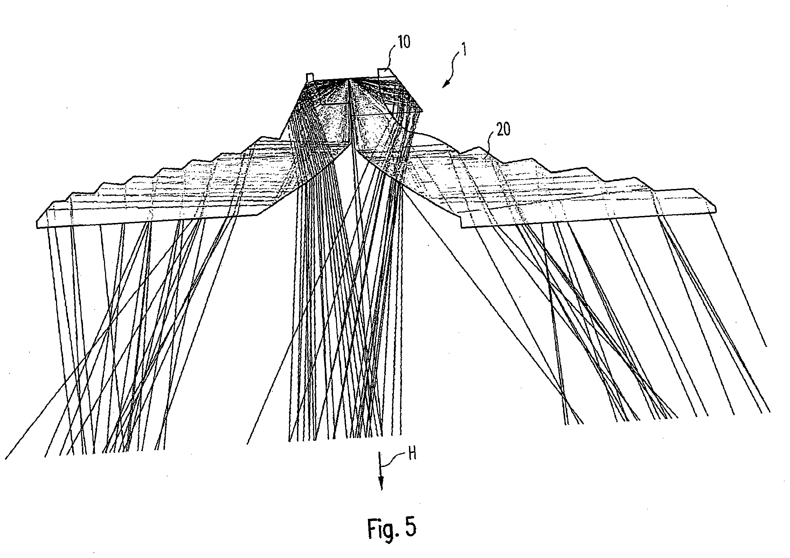

Mit einer derartigen Linsenanordnung 1 wird es ermöglicht, das große und vor allem lange Stacks so ausgebildet sind, dass die thermischen Einflüsse auf die Optik insgesamt minimiert werden, was wiederum zu einer Reduzierung der Kollisionsgefahr von Leuchtmitteln 2 und Optik und einer Stabilisierung der Abstrahlcharakteristik für gewisse Temperaturgrenzen führt. Ferner ist es durch die unterschiedlichen Stufen 10, 20, 30, 40 der Linsenanordnung 1 bzw. Optik möglich, komplexe optische Geometrien zu realisieren, die z.B. mit einstufigen Optiken nicht bereitgestellt bzw. hergestellt werden können, da sie sonst eventuell nicht entformbar sind. Diesbezüglich wird beispielsweise auf die Figur 5 verwiesen, die auf der linken Seite eine einstufige Splitlinse und auf der rechten Seite eine zweistufige Splitlinse 1 zeigt, wobei anhand der Abstrahlcharakteristik bereits zu erkennen ist, wie sich die vorteilhafte zweiteilige Ausgestaltung im Hinblick auf eine homogene Lichtstreuung positiv bemerkbar macht. Außerdem wäre die Ausgestaltung der rechts dargestellten Linsenanordnung 1 als einteiliges Bauteil nicht möglich, da nicht (leicht) entformbar.

Figur 8 zeigt beispielsweise eine weitere Ausgestaltungsform der länglichen mehrteiligen Linsenanordnung 1. In der in Figur 8 gezeigten Ausführungsform ist eine dreistufige Linsenanordnung 1 gezeigt, welche neben dem ersten optischen Element 10 und dem zweiten optischen Element 20 ein weiteres, drittes optisches Element 30 aufweist. Ferner ist in Figur 8 ein entsprechendes Leuchtmittel 2 gezeigt, welches vorzugsweise auf einer (länglichen) Platine 3 aufgebracht ist. Wie beispielsweise in Figur 8 dargestellt, können das oder die erste(n) optische(n) Element(e) 10 direkt auf der Platine 3 oder dem Gehäuse 4 lösbar oder unlösbar vorgesehen sein. Es ist daher auch denkbar, dass sowohl die Linsenanordnung 1 als auch die Leuchtmittel 2 bzw. die Platine 3 beispielsweise über ein Gehäuse 4 der Leuchte L aufgenommen und relativ zueinander positioniert werden.

Die erfindungsgemäße Leuchte L weist daher eine Vielzahl von Leuchtmitteln 2 sowie eine erfindungsgemäße längliche mehrteilige bzw. mehrstufige Linsenanordnung 1 auf, wobei jedem der Lichteintrittsbereiche 11 - insbesondere der Lichteintrittsbereiche des ersten optischen Elements 10 - kein, ein oder mehrere Leuchtmittel 2 definiert optisch zugeordnet sind. Ist ferner ein separates Gehäuse 4 der Leuchte L vorgesehen, so kann die Linsenanordnung 1 insgesamt, vorzugsweise das oder die in Lichtlenkrichtung letzte(n) optische(n) Element(e), eine Abdeckung der Leuchte L bzw. des Gehäuses 4 bilden, wie dies in Figur 8 gezeigt ist. Es ist jedoch auch denkbar, dass das die Linsenanordnung 1 und die Leuchtmittel 2 aufnehmende Gehäuse 4 mittels einer separaten Abdeckung verschlossen ist, die vorzugsweise lichtbeeinflussende (beispielsweise lichtstreuende) Eigenschaften aufweist.

Das zuvor in Figur 6 gezeigte Schutzelement 25 kann alleine oder auch in Verbindung mit dem Gehäuse 4 oder der Platine 3 den räumlich nach außen geschlossenen Raum I zum Schutz der Leuchte L bzw. Leuchtmittel 2 bereitstellen. Hierzu wirkt ein vorgesehenes Verrastelement 26 des Schutzelements 25 mit einem korrespondierenden Verrastelement der Linsenanordnung 1 oder der Leuchte L bzw. einem Teil derselben zum mechanischen Verbinden oder Zusammenhalten der Linsenanordnung 1 oder der Leuchte L zusammen.

Wenigstens das in Lichtlenkrichtung letzte optische Element 20, 30, 40 kann in Richtung der Längsachse L3, L4 gesehen im Wesentlichen genauso lang wie das Gehäuse 4 oder die Leuchte L bzw. die die Leuchtmittel aufweisende Platine 3 sein. Hierzu kann wenigstens die letzte optische Stufe 20, 30, 40 der mehrteiligen gestapelten Linsenanordnung 1 beispielsweise als Extrusionslinse ausgeführt werden, wodurch sehr einfach ein geschlossenes und geschütztes optisches System bereitgestellt werden kann.

Insbesondere in dem Fall, in dem wenigstens eine der optischen Elemente bzw. Stufen 10, 20, 30, 40 direkt auf die Platine 3 aufgebracht ist, kann auf einfache Weise eine Art Berührungsschutz der elektrischen Komponenten (bspw. Leuchtmittel bzw. LED 2) bereitgestellt werden. Dies wird dann zusätzlich durch die zuvor beschriebenen Schutzelemente 25 und ggf. ferner auch das Gehäuse 4 der leuchte L selbst bereitgestellt werden. Die nachfolgende bzw. die nachfolgenden Stufen können dann als partielle oder gesamte Abdeckung der Leuchte L dienen.

Als Leuchtmittel 2 kommen insbesondere Leuchtdioden (LED) zum Einsatz, wobei die Erfindung nicht auf derartige Leuchtmittel beschränkt ist.

Die Merkmale der zuvor beschriebenen Ausführungsbeispiele sind im Rahmen der Erfindung beliebig miteinander kombinierbar. So ist die Erfindung beispielsweise nicht auf eine Anzahl oder Positionierung oder Ausgestaltung der einzelnen optischen Elemente 10, 20, 30, 40 beschränkt, solange diese separat bereitgestellt und derart optisch miteinander zusammenwirken, dass sie eine geschlossene Lichtlenkung wenigstens eines Teils des von dem Leuchtmittel 2 abgestrahlten Lichts ermöglichen. Auch muss das durch die optischen Elemente 10, 20, 30, 40 gelenkte Licht nicht alle optischen Elemente 10, 20, 30, 40 durchlaufen, sondern kann wenigstens zum Teil auch anwendungsbedingt nur eines oder einen Teil der optischen Elemente 10, 20, 30, 40 durchlaufen, wie dies beispielhaft in Figur 5 dargestellt ist.

Des Weiteren sind weder die optischen Elemente 10, 20, 30, 40 noch das Gehäuse 4 oder andere Bauteile auf bestimmte Materialien beschränkt. Bezüglich der optischen Elemente sei darauf hingewiesen, dass diese bevorzugt aus PMMA und/oder PC hergestellt sein können, wobei optische Elemente 10, 20, 30, 40 aus beliebigen Materialien beliebig miteinander kombiniert werden können. Denkbar sind in diesem Zusammenhang daher auch Kombinationen mit anderen bekannten optischen Materialien, wie beispielsweise verschiedene Glassorten.

Bezüglich der Ausgestaltung der optischen Elemente bzw. optischen Stufen 10, 20, 30, 40 sei ferner angemerkt, dass diese jede beliebige (vorzugweise bekannte) Form aufweisen können, welche je nach Anwendungsfall anders sinnvoll und beliebig miteinander kombiniert werden können.

Wie beispielsweise auch Figur 5 zu entnehmen ist, können neben dem ersten optischen Element 10 auch die weiteren optischen Elemente 20, 30, 40 eine Ausnehmung bzw. einen direkte Lichteintrittsbereich 23, 33, 43 zur Aufnahme eines Leuchtmittels 2 bzw. wenigstens zum Einleiten des von dem Leuchtmittel 2 abgestrahlten Lichts in die Linsenanordnung 1 aufweisen.

Wie ebenfalls Figur 5 zu entnehmen ist, kann neben dem ersten optischen Element 10 auch jedes weitere optische Element 20, 30, 40 vergleichbare Lichteintrittsbereiche 11, 23, 33, 43 mit vergleichbaren Merkmalen aufweisen, denen die Leuchtmittel 2 ebenso direkt zugeordnet werden können und über die Licht des Leuchtmittels 2 direkt in die Linsenanordnung 1 eingeleitet werden kann.

## Patentansprüche

1. Längliche mehrteilige Linsenanordnung (1) für Leuchten (L) zur Beeinflussung eines von einem Leuchtmittel (2) abgestrahlten Lichts, aufweisend ein erstes längliches optisches Element (10) mit einer ersten Längsachse (L2) und wenigstens ein dem ersten optischen Element (10) in Lichtlenkrichtung nachgeschaltetes und vom ersten optischen Element (10) separat bereitgestelltes zweites längliches optisches Element (20) mit einer zweiten Längsachse (L₃),
wobei wenigstens das erste optische Element (10) wenigstens einen entlang der ersten Längsachse (L2) vorgesehenen, definierten Lichteintrittsbereich (11) zum Einleiten von Licht des Leuchtmittels (2) in die Linsenanordnung (1) aufweist, wobei das zweite optische Element (20) zur Lichtlenkung der Linsenanordnung (1) optisch mit dem ersten optischen Element (10) zusammenwirkt, um die Lichtlenkung des ersten optischen Elements (10) fortzusetzen,
wobei der Lichteintrittsbereich (11, 23, 33, 43) als Ausnehmung zur Aufnahme der Leuchtmittel (2) ausgebildet ist,
wobei das erste optische Element (10) ein die Lichteintrittsbereiche (11) bildendes Raster oder Gitter (12) aufweist, und jedem Lichteintrittsbereich (11) wenigstens ein Leuchtmittel (2) zuordenbar ist, und
wobei die optischen Elemente (10, 20, 30, 40) als lineare Linsenelemente ausgebildet sind,
**dadurch gekennzeichnet, dass** das in Lichtlenkrichtung letzte optische Element (10, 20, 30, 40) ein mit dem optischen Element (10, 20, 30, 40) integral ausgebildetes Schutzelement (25) zum Schutz der Leuchtmittel (2) aufweist, wobei das Schutzelement (25) Verrastelemente (26) zum mechanischen Verbinden oder Zusammenhalten der Linsenanordnung (1) oder einer die Linsenanordnung (1) aufweisenden Leuchte (L) aufweist.

2. Längliche mehrteilige Linsenanordnung (1) nach Anspruch 1, ferner aufweisend ein oder mehrere weitere, wenigstens dem ersten optischen Element (10) in Lichtlenkrichtung nachgeschaltete und vom ersten und zweiten optischen Element (10, 20) separat bereitgestellte längliche optische Elemente (30, 40) mit jeweils einer Längsachse (L₄), wobei die weiteren optischen Elemente (30, 40) zur Lichtlenkung optisch mit dem ersten und vorzugsweise dem zweiten und anderen weiteren optischen Element (10, 20, 30, 40) zusammenwirkt, um eine gewünschte geschlossene Lichtlenkung der Linsenanordnung (1) zu erzielen.

3. Längliche mehrteilige Linsenanordnung (1) nach Anspruch 1 oder 2, wobei die Längsachsen (L2, L₃, L₄) der optischen Elemente (10, 20, 30, 40), vorzugsweise wenigstens des ersten und zweiten optischen Elements (10, 20), parallel zueinander ausgerichtet sind, oder wobei wenigstens eine der Längsachsen (L2, L₃, L₄), vorzugsweise eine der Längsachsen (L₄) der weiteren optischen Elemente (30, 40), in einer Ebene senkrecht zu einer Hauptabstrahlrichtung der Linsenanordnung (1), um einen vorgegebenen Winkel zu der oder den anderen Längsachsen (L2, L₃, L₄) schräg oder quer ausgerichtet ist.

4. Längliche mehrteilige Linsenanordnung (1) nach einem der vorhergehenden Ansprüche, wobei die Lichteintrittsbereiche (11) als optische Lichtbeeinflussungselemente, insbesondere als Linsen, ausgebildet sind oder Lichtbeeinflussungselemente aufweisen.

5. Längliche mehrteilige Linsenanordnung (1) nach einem der vorhergehenden Ansprüche, wobei die optischen Elemente (10, 20, 30, 40), vorzugsweise wenigstens die Lichteintrittsbereiche (23, 33, 43) des zweiten und der weiteren optischen Elemente (20, 30, 40), wenigstens teilweise in vorzugsweise flächigem Kontakt mit anderen optischen Elementen (10, 20, 30, 40), vorzugsweise den Lichtaustrittsbereichen (14, 24, 34, 44) wenigstens einer der in Lichtlenkrichtung vorgeschalteten optischen Elemente (10, 20, 30, 40), sind.

6. Längliche mehrteilige Linsenanordnung (1) nach einem der vorhergehenden Ansprüche, wobei die optischen Elemente (10, 20, 30, 40) mechanisch miteinander korrespondierende Verbindungselemente zum definierten Verbinden und Positionieren der optischen Elemente (10, 20, 30, 40) zueinander aufweisen, wobei die Verbindungselemente vorzugsweise Schienen, Führungen, Zapfen, Stifte sowie entsprechende Aufnahmeelemente aufweisen.

7. Längliche mehrteilige Linsenanordnung (1) nach einem der vorhergehenden Ansprüche, wobei wenigstens eines der optischen Elemente (10, 20, 30,40), vorzugsweise wenigstens das zweite optische Element (20), eine sich in Längsrichtung des optischen Elementes (10, 20, 30, 40) vorzugsweise über dessen gesamte Länge erstreckende Ausnehmung (21) zur Aufnahme eines weiteren optischen Elements (10, 20, 30, 40), vorzugsweise des ersten optischen Elements (10), aufweist.

8. Längliche mehrteilige Linsenanordnung (1) nach einem der vorhergehenden Ansprüche, wobei die optischen Elemente (10, 20, 30, 40) als Extrusionslinsen, Linsenarrays, insbesondere Platten mit diskreten Linsen oder Linsenelementen, Gitter- bzw. Rasterelemente, MPO- oder KOP-Platten, Diffraktive Optiken, Freiformoptiken und/oder als diffus streuende Platten ausgebildet sind, wobei die jeweiligen optischen Elemente (10, 20, 30, 40) im Querschnitt gesehen vorzugsweise eine komplexe Geometrie aufweisen.

9. Leuchte (L), aufweisend eine Vielzahl von Leuchtmitteln (2), wobei die Leuchtmittel (2) bevorzugt Leuchtdioden umfassen, sowie eine längliche mehrteilige Linsenanordnung (1) gemäß einem der vorhergehenden Ansprüche, wobei jedem der Lichteinrittsbereiche (11, 23, 33, 43) kein, ein oder mehrere Leuchtmittel (2) definiert optisch zugeordnet sind.

10. Leuchte (L) nach Anspruch 9, ferner aufweisend ein Gehäuse (4) zur Aufnahme der Leuchtmittel (2) und der Linsenanordnung (1), wobei die Linsenanordnung (1), vorzugsweise das oder die in Lichtlenkrichtung letzte(n) längliche(n) optische(n) Element(e) (20, 30, 40), eine Abdeckung der Leuchte (L) bzw. des Gehäuses (4) bilden.

11. Leuchte (L) nach Anspruch 9 oder 10, wobei die Leuchtmittel (2) auf einer vorzugsweise länglichen Platine (3) aufgebracht sind, wobei vorzugsweise das oder die erste(n) optische(n) Element(e) (10, 20, 30, 40) direkt auf der Platine (3) oder dem Gehäuse (4) lösbar oder unlösbar vorgesehen sind.

12. Leuchte (L) nach einem der Ansprüche 9 bis 11, wobei das Schutzelement (25) alleine oder in Verbindung mit dem Gehäuse (4) oder der Platine (3) einen räumlich nach außen geschlossenen Raum (I) zum Schutz der Leuchte (L) bzw. Leuchtmittel (2) bereitstellt, wobei das Verrastelement (25) vorzugsweise mit einem korrespondierenden Verrastelement (26) der Linsenanordnung (1) oder der Leuchte (L) zum mechanischen Verbinden oder Zusammenhalten der Linsenanordnung (1) oder der Leuchte (L) zusammenwirkt.

13. Leuchte (L) nach einem der Ansprüche 9 bis 12, wobei wenigstens ein, vorzugsweise das in Lichtlenkrichtung letzte optische Element (10, 20, 30, 40) in Richtung der Längsachse (L1) der Linsenanordnung (1) gesehen im Wesentlichen genauso lang wie das Gehäuse (4) oder das Leuchtmittel (2) bzw. die die Leuchtmittel (2) aufweisende Platine (3) ist.

## Claims

1. An elongate multipartite lens arrangement (1) for luminaires (L) for influencing a light emitted from a light source (2), having a first elongate optical element (10) with a first longitudinal axis (L₂) and at least one second elongate optical element (20) having a second longitudinal axis (L₃), which is disposed downstream of the first optical element (10) in the light guiding direction and is provided separate from the first optical element (10),
wherein at least the first optical element (10) has at least one defined light entrance region (11) provided along the first longitudinal axis (L₂) and serving for introducing light from the light source (2) into the lens arrangement (1),
wherein the second optical element (20) for the light guiding of the lens arrangement (1), interacts optically with the first optical element (10) in order to continue the light guiding of the first optical element (10),
wherein the light entrance region (11, 23, 33, 43) is designed as a recess for receiving the light source (2), and
wherein the first optical element (10) has a raster or grid (12) forming the light entrance regions (11), and at least one light source (2) can be assigned to each light entrance region (11),
wherein the optical elements (10, 20, 30, 40) are designed as linear lens elements,
**characterized in that**
the last optical element (10, 20, 30, 40) in the light guiding direction has a protective element (25) integrally formed with the optical element (10, 20, 30, 40) for protecting the light source (2), wherein the protective element (25) has latching elements (26) for mechanically connecting or holding together the lens arrangement (1) or a luminaire (L) having the lens arrangement (1).

2. An elongate multipartite lens arrangement (1) according to Claim 1, also having one or several further elongate optical elements (30, 40) with in each case a longitudinal axis (L₄), which are disposed downstream at least of the first optical element (10) in the light guiding direction and are provided separate from the first and second optical element (10, 20), wherein the further optical elements (30, 40) for the light guiding interact optically with the first and preferably the second and other further optical element (10, 20, 30, 40), in order to achieve a desired closed light guiding of the lens arrangement (1).

3. An elongate multipartite lens arrangement (1) according to Claim 1 or 2, wherein the longitudinal axes (L₂, L₃, L₄) of the optical elements (10,20, 30, 40), preferably at least of the first and second optical elements (10, 20), are aligned parallel to one another, or wherein at least one of the longitudinal axes (L₂, L₃, L₄), preferably one of the longitudinal axes (L₄) of the further optical elements (30, 40), is aligned in a plane perpendicular to the main radiation direction of the lens arrangement (1) by a predetermined angle obliquely or transversely to one or the other longitudinal axes (L₂, L₃, L₄).

4. An elongate multipartite lens arrangement (1) according to any one of the preceding claims, wherein the light entrance regions (11) are designed as optical light influencing elements, in particular as lenses or have light influencing elements.

5. An elongate multipartite lens arrangement (1) according to any one of the preceding claims, wherein the optical elements (10, 20, 30, 40), preferably at least the light entrance regions (23, 33, 43) of the second and the further optical elements (20, 30, 40), are at least partially in preferably planar contact with other optical elements (10, 20, 30, 40), preferably the light exit regions (14, 24, 34, 44) at least of one of the optical elements (10, 20, 30, 40) upstream in the light guiding direction.

6. An elongate multipartite lens arrangement (1) according to any one of the preceding claims, wherein the optical elements (10,20, 30, 40) have connecting elements corresponding mechanically with one another for the defined connection and positioning of the optical elements (10, 20, 30, 40) relative to one another, wherein the connecting elements preferably have rails, guides, pins, pegs as well as corresponding receiving elements.

7. An elongate multipartite lens arrangement (1) according to any one of the preceding claims, wherein at least one of the optical elements (10, 20, 30, 40), preferably at least the second optical element (20), has a recess (21) extending in the longitudinal direction of the optical element (10, 20, 30, 40) preferably over its entire length for receiving a further optical element (10, 20, 30, 40), preferably the first optical element (10).

8. An elongate multipartite lens arrangement (1) according to any one of the preceding claims, wherein the optical elements (10, 20, 30, 40) are designed as extrusion lenses, lens arrays, in particular plates with discrete lenses or lens elements, grid or raster elements, MPO- or KOP-plates, diffractive optics, freeform optics and/or as diffusely scattering plates, wherein the respective optical elements (10, 20, 30, 40) seen in cross section preferably have a complex geometry.

9. A luminaire (L), having a plurality of light sources (2), wherein the light sources (2) preferably comprise light-emitting diodes, as well as an elongate multipartite lens arrangement (1) according to any one of the preceding claims, wherein no, one or several light sources (2) optically defined are assigned to each of the light entrance regions (11, 23, 33, 43).

10. A luminaire (L) according to Claim 9, also having a housing (4) for receiving the light source (2) and the lens arrangement (1), wherein the lens arrangement (1) preferably the last elongate optical element(s) (20, 30, 40) in the light guiding direction, form a cover of the luminaire (L) or of the housing (4).

11. A luminaire (L) according to Claim 9 or 10, wherein the light sources (2) are applied to a preferably elongate board (3), wherein preferably the first optical element(s) (10, 20, 30, 40) are provided detachably or non-detachably directly on the board (3) or the housing (4).

12. A luminaire (L) according to any one of Claims 9 to 11, wherein the protective element (25) alone or in combination with the housing (4) or the board (3) provides a spatially outwardly closed space (I) for the protection of the luminaire (L) or light source (2), wherein the latching element (25) preferably interacts with a corresponding latching element (26) of the lens arrangement (1) or of the luminaire (L) for mechanically connecting and holding together the lens arrangement (1) or the luminaire (L).

13. A luminaire (L) according to any one of Claims 9 to 12, wherein at least one, preferably the last optical element (10, 20, 30, 40) in the light guiding direction, seen in the direction of the longitudinal axis (L₁) of the lens arrangement (1), is essentially as long as the housing (4) or the light source (2) or the board (3) having the light source (2).

## Revendications

1. Agencement de lentilles (1) de forme allongée en plusieurs parties pour des lampes (L), destiné à agir sur une lumière émise par un moyen d'éclairage (2), présentant un premier élément optique (10) allongé avec un premier axe longitudinal (L2) et au moins un deuxième élément optique (20), monté en aval du premier élément optique (10) dans la direction de guidage de lumière et fourni séparément du premier élément optique (10), avec un deuxième axe longitudinal (L3),
au moins le premier élément optique (10) présentant une zone d'entrée de lumière (11) définie, prévue le long du premier axe longitudinal (L2), destinée à l'introduction de la lumière du moyen d'éclairage (2) dans l'agencement de lentilles (1),
le deuxième élément optique (20) coopérant optiquement pour le guidage de lumière de l'agencement de lentilles (1) avec le premier élément optique (10) pour poursuivre le guidage de lumière du premier élément optique (10),
la zone d'entrée de lumière (11, 23, 33, 43) étant constituée en tant que creux destiné à la réception des moyens d'éclairage (2), et
le premier élément optique (10) présentant une trame ou grille (12) formant les zones d'entrée de lumière (11), et au moins un moyen d'éclairage (2) pouvant être affecté à chaque zone d'entrée de lumière (11),
les éléments optiques (10, 20, 30, 40) étant constitués en tant qu'éléments de lentilles linéaires,
**caractérisé en ce que** le dernier élément optique (10, 20, 30, 40) dans la direction de guidage de lumière présente un élément de protection (25), constitué de préférence d'un seul tenant avec l'élément optique (10, 20, 30, 40), pour la protection des moyens d'éclairage (2), l'élément de protection (25) présentant de préférence des éléments d'encliquetage (26) pour le raccordement ou la retenue mécanique de l'agencement de lentilles (1) ou d'une lampe (L) présentant l'agencement de lentilles (1).

2. Agencement de lentilles (1) de forme allongée en plusieurs parties selon la revendication 1, présentant également un ou plusieurs autres éléments optiques (30, 40) allongés, montés en aval d'au moins le premier élément optique (10) dans la direction de guidage de lumière et fournis séparément du premier et du deuxième élément optique (10, 20), avec respectivement un axe longitudinal (L4), les autres éléments optiques (30, 40) coopérant optiquement pour le guidage de lumière avec le premier et de préférence avec le deuxième et d'autres éléments optiques (10, 20, 30, 40) pour obtenir un guidage de lumière fermé souhaité de l'agencement de lentilles (1) .

3. Agencement de lentilles (1) de forme allongée en plusieurs parties selon la revendication 1 ou 2, les axes longitudinaux (L2, L3, L4) des éléments optiques (10, 20, 30, 40), de préférence d'au moins le premier et le deuxième élément optique (10, 20), étant orientés parallèlement entre eux, ou au moins un des axes longitudinaux (L2, L3, L4), de préférence un des axes longitudinaux (L4) des autres éléments optiques (30, 40), étant aligné dans un plan perpendiculairement à une direction de rayonnement principale de l'agencement de lentilles (1), obliquement ou transversalement selon un angle prédéfini par rapport à l'axe longitudinal ou aux autres axes longitudinaux (L2, L3, L4).

4. Agencement de lentilles (1) de forme allongée en plusieurs parties selon l'une des revendications précédentes, les zones d'entrée de lumière (11) étant constituées en tant qu'éléments d'action optiques sur la lumière, en particulier en tant que lentilles, ou présentant des éléments d'action sur la lumière.

5. Agencement de lentilles (1) de forme allongée en plusieurs parties selon l'une des revendications précédentes, les éléments optiques (10, 20, 30, 40), de préférence au moins les zones d'entrée de lumière (23, 33, 43) du deuxième et des autres éléments optiques (20, 30, 40), étant au moins partiellement en contact, de préférence bien à plat, avec d'autres éléments optiques (10, 20, 30, 40), en particulier les zones de sortie de lumière (14, 24, 34, 44) d'au moins un des éléments optiques (10, 20, 30, 40) montés en amont dans la direction de guidage de lumière.

6. Agencement de lentilles (1) de forme allongée en plusieurs parties selon l'une des revendications précédentes, les éléments optiques (10, 20, 30, 40) présentant des éléments de raccordement correspondant entre eux mécaniquement pour le raccordement et le positionnement définis des éléments optiques (10, 20, 30, 40) les uns par rapport aux autres, les éléments de raccordement présentant de préférence des rails, des guidages, des tenons, des broches ainsi que des éléments de réception correspondants.

7. Agencement de lentilles (1) de forme allongée en plusieurs parties selon l'une des revendications précédentes, au moins un des éléments optiques (10, 20, 30, 40), de préférence au moins le deuxième élément optique (20), présentant un creux (21) s'étendant dans la direction longitudinale de l'élément optique (10, 20, 30, 40) de préférence sur toute sa longueur pour la réception d'un autre élément optique (10, 20, 30, 40), de préférence du premier élément optique (10).

8. Agencement de lentilles (1) de forme allongée en plusieurs parties selon l'une des revendications précédentes, les éléments optiques (10, 20, 30, 40) étant constitués en tant que lentilles par extrusion, groupes de lentilles, en particulier plaques avec des lentilles discrètes ou éléments de lentilles, éléments de grille ou respectivement de trame, plaques MPO ou KOP, optiques diffractives, optiques freeform et/ou en tant que plaques à dispersion diffuse, les éléments optiques (10, 20, 30, 40) respectifs présentant, vus en section transversale, de préférence une géométrie complexe.

9. Lampe (L), présentant une multiplicité de moyens d'éclairage (2), les moyens d'éclairage (2) comprenant de préférence des diodes lumineuses, ainsi qu'un agencement de lentilles (1) de forme allongée en plusieurs parties selon l'une des revendications précédentes, aucun, un ou plusieurs moyens d'éclairage (2) étant affectés optiquement de façon définie à chacune des zones d'entrée de lumière (11, 23, 33, 43) .

10. Lampe (L) selon la revendication 9, présentant en outre un boîtier (4) destiné à la réception des moyens d'éclairage (2) et de l'agencement de lentilles (1), l'agencement de lentilles (1), de préférence le ou les dernier(s) élément(s) optique(s) allongé (s) (20, 30, 40), formant un recouvrement de la lampe (L) ou respectivement du boîtier (4).

11. Lampe (L) selon la revendication 9 ou 10, les moyens d'éclairage (2) étant mis en place sur une platine (3) de préférence allongée, le ou les premier(s) élément(s) optique(s) allongé (s) (10, 20, 30, 40) étant de préférence prévus de façon détachable ou non détachable directement sur la platine (3) ou sur le boîtier (4).

12. Lampe (L) selon l'une des revendications 9 à 11, l'élément de protection (25) fournissant, seul ou en liaison avec le boîtier (4) ou la platine (3), un espace (I) fermé spatialement vers l'extérieur pour la protection de la lampe (L) ou respectivement des moyens d'éclairage (2), l'élément d'encliquetage (25) coopérant de préférence avec un élément d'encliquetage (26) correspondant de l'agencement de lentilles (1) ou de la lampe (L) pour le raccordement ou la retenue mécanique de l'agencement de lentilles (1) ou de la lampe (L).

13. Lampe (L) selon l'une des revendications 9 à 12, au moins un, de préférence le dernier, élément optique (10, 20, 30, 40) dans la direction de guidage de lumière étant, vu dans la direction de l'axe longitudinal (L1) de l'agencement de lentilles (1), essentiellement aussi long que le boîtier (4) ou le moyen d'éclairage (2) ou respectivement la platine (3) présentant les moyens d'éclairage (2).
